# EUROPÄISCHE PATENTANMELDUNG

(11) **EP 0 734 663 A2**
(43) Veröffentlichungstag der Anmeldung: **02.10.1996**
(21) Anmeldenummer: 96104083.9
(22) Anmeldetag: 15.03.1996
(51) Int. Cl.: A45C 13/18, B62J 9/00

(54) **Verschlussanordnung für Motorradkoffer**

(30) Priorität: 25.03.1995 DE 19511013
(71) Anmelder: Hepco & Becker Gmbh, 66989 Höhfröschen (DE)
(72) Erfinder: Merdian, Franz-Josef, 66997 Hinterweidenthal (DE)
(74) Vertreter: Jeck, Anton, Dipl.-Ing.

(57) **Zusammenfassung**

Es handelt sich um eine Verschlußanordnung (10) für Behälter, insbesondere Motorradkoffer, mit einem Grundkörper (11) mit einem angelenkten Tragegriff 12, der über einen Haltemechanismus mit einem verschwenkbaren und mit einem Dritteil 60, z.B. Motorradstange, betriebsgemäß verbindbaren Verschlußorgan (56) zusammenarbeitet. Zwischen dem Tragegriff (12) und dem Verschlußorgan (56) ist mindestens ein verschiebbares Organ (38) angeordnet, das mit dem Verschlußorgan (56) über einen Hebel (44) zusammenarbeitet, während es mit dem Tragegriff (12) über mindestens einem Kniehebel 24 in Wirkverbindung steht.

## Beschreibung

Die Erfindung betrifft eine Verschlußanordnung für Behälter, insbesondere Motorradkoffer, nach dem Oberbegriff des Anspruches 1.

Herkömmliche Verschlußanordnungen der eingangs genannten Art, wie sie z.B. in der DE 3 716 445 A1 beschrieben sind, werden vorzugsweise bei Motorradkoffern verwendet. Der Verschluß des Behältnisses ist über den Tragegriff betätigbar. Hierfür sind ein Übertragungshebel und ein Schließorgan vorgesehen. Der Tragegriff läßt sich verschwenken und diese Verschwenkbewegung wird über den Übertragungshebel als translatorische Bewegung auf das Schließorgan übertragen. Durch diese translatorische Bewegung öffnen bzw. schließen sich Verrriegelungsbacken und geben einen Schloßbügel frei oder umgreifen ihn. Außerdem steuert der Übertragungshebel über einen Bowdenzug einen Schließhaken, mit dem der Motorradkoffer an einen Rahmenabschnitt eines Motorradrahmens festlegbar ist. Der Tragegriff kann drei Stellungen einnehmen: Eine rechte horizontale Stellung für das Öffnen des Motorradkoffers, eine aufrechtstehende Stellung für das Schließen und eine linke horizontale Stellung für das Verriegeln des Motorradkoffers am Motorradrahmen. Die im Aufbau aufwendige Verschlußanordnung ist zudem mit dem Nachteil behaftet, daß in den einzelnen Arbeitspositionen des Tragegriffes auf diesen solche Kraft übertragen werden kann, die nicht unbedingt zur sachgemäßen Benutzung des Koffers vorgesehen ist.

Ausgehend von dem obigen Stand der Technik liegt der Erfindung die Aufgabe zugrunde, hier Abhilfe zu schaffen.

Die gestellte Aufgabe wird erfindungsgemäß durch die Merkmale des Anspruches 1 gelöst.

Man erkennt, daß die Erfindung jedenfalls dann verwirklicht ist, wenn der Tragegriff mit dem Verschlußorgan über einen Hebelmechanismus verbunden ist, der gewährleistet, daß in der Schließstellung des Hebels auf das Verschlußorgan eine annähernd unendliche Kraft ausgeübt werden muß, um das Veschlußorgan aus seiner Schließstellung in seine Öffnungsstellung zu überführen.

Weitere zweckmäßige und vorteilhafte Ausgestaltungen der Erfindung gehen aus den Unteransprüchen hervor.

Eine besonders zweckmäßige Ausgestaltung der Erfindung sieht vor, daß das Organ eine linear geführte Stange ist, die zwischen zwei Arbeitspositionen verschiebbar ist. Im Rahmen dieses Erfindungsgedankens ist es besonders zweckmäßig, wenn Führungskörper vorgesehen sind, zwischen denen die Stange geführt ist. Eine weitere zweckmäßige Ausgestaltung sieht vor, daß der Hebel ein zweiarmiger Winkelhebel ist und daß das Verschlußorgan ein zweiarmiger Hebel ist, dessen Lastarm eine Nase trägt, die in ihrer wirksamen Betriebsstellung das Dritteil zumindest teilweise umgreift bzw. mit diesen in Druckverbindung steht.

Ferner ist vorgesehen, daß im Kraftarm des Verschlußorgans ein Langloch ausgebildet ist, in dem ein den Lastarm des Winkelhebels mit dem Kraftarm des Verschlußorgans verbindender Bolzen verschieblich angeordnet ist.

Eine weitere zweckmäßige Ausgestaltung sieht vor, daß der Kniehebel mit dem Tragegriff mittels einer Zug- und Druckstange gelenkig verbunden ist. Dabei besteht der Kniehebel aus zwei Stangen, von denen die eine mit dem Grundkörper sowie mit der Zug- und Druckstange gelenkig verbindbar ist, während die andere Stange verstellbar angeordnet und sowohl mit dem Organ als auch mit der Zug- und Druckstange gelenkig verbindbar ist. Eine annähernd unlösbare Verbindung des Verschlußorgans mit dem Dritteil wird dadurch erreicht, daß in eingeschwenkter Stellung des Tragegriffes die Stangen des Kniehebels annähernd parallel zueinander verlaufen. Hierbei ist es besonders zweckmäßig, wenn in der eingeschwenkten Stellung des Tragegriffes der Gelenkpunkt des Kniehebels hinter seinem Totpunkt angeordnet ist. Durch diese Maßnahme wird erreicht, daß das Verschlußorgan aus seiner Betriebsstellung nur dann gebracht werden kann, wenn der Tragegriff verschwenkt wird. Eine weitere zweckmäßige Ausgestaltung der Erfindung sieht eine Riegelstange vor, die mit dem Kniehebel in Wirkverbindung bringbar ist. Dabei nimmt die Riegelstange mindestens zwei Betriebsstellungen ein, wobei sie in der einen Betriebsstellung den Kniehebel sperrt, während sie ihn in der anderen Betriebsstellung freigibt. Die Riegelstange ist ferner so beschaffen, daß sie in ihrer Richtung verstellbar und den jeweiligen Arbeitspositionen mittels eines Schlosses festlegbar ist. Dabei besitzt die Riegelstange quer zu ihr verlaufende Ausnehmungen bzw. Abschrägungen, durch welche die Kniehebel freigebbar sind bzw. gesperrt werden können.

Handelt es sich um eine Verschlußanordnung mit einer Schließplatte sowie einer Deckelkralle, dann ist es zweckmäßig, wenn die Riegelstange weitere Einschnitte bzw. Ausnehmungen aufweist, die mit der Schließplatte betriebsgemäß verbindbar sind und diese sperren bzw. freigeben.

Schließlich ist vorgesehen, daß die Riegelstange drei Arbeitspositionen einnimmt, derart, daß sie in der ersten Arbeitsposition sowohl den Kniehebel als auch die Schließplatte sperrt, in der zweiten Arbeitsposition den Kniehebel sperrt und die Schließplatte freigibt und in ihrer dritten Arbeitsposition sowohl den Kniehebel als auch die Schließplatte freigibt.

Ausführungsbeispiele der Erfindung sind in der Zeichnung schematisch dargestellt und werden im folgenden näher erläutert. Es zeigen
- Fig. 1: eine Verschlußanordnung in Seitenansicht und Schließstellung des Tragegriffes bzw. Verschlußorgans,
- Fig. 2: die Verschlußanordnung nach Fig. 1 in geöffneter Betriebsstellung des Tragegriffes und des Verschlußorgans,
- Fig. 3: eine Draufsicht der Verschlußanordnung nach Fig. 1,
- Fig. 4: das Verschlußorgan nach Fig. 1 vergrößert dargestellt,
- Fig. 5: eine Riegelstange in Seitenansicht,
- Fig. 6: die in Fig. 5 dargestellte Riegelstange in vertikaler Draufsicht,
- Fig. 7, 8: eine geringfügig abgewandelte Verschlußanordnung in Öffnungs- und in Schließstellung und

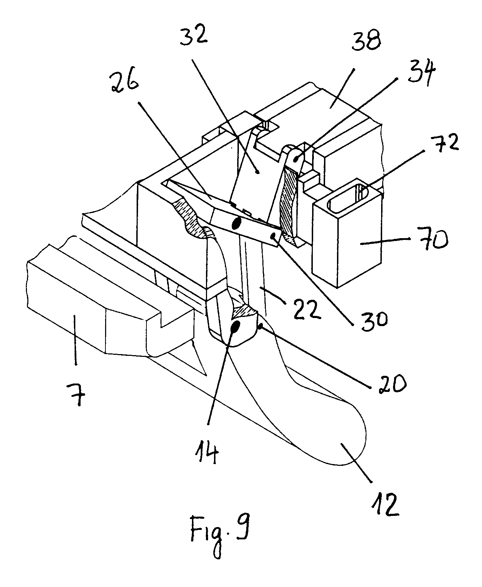

- Fig. 9: einen Teil nach Fig. 7 vergrößert dargestellt und teilweise gebrochen.

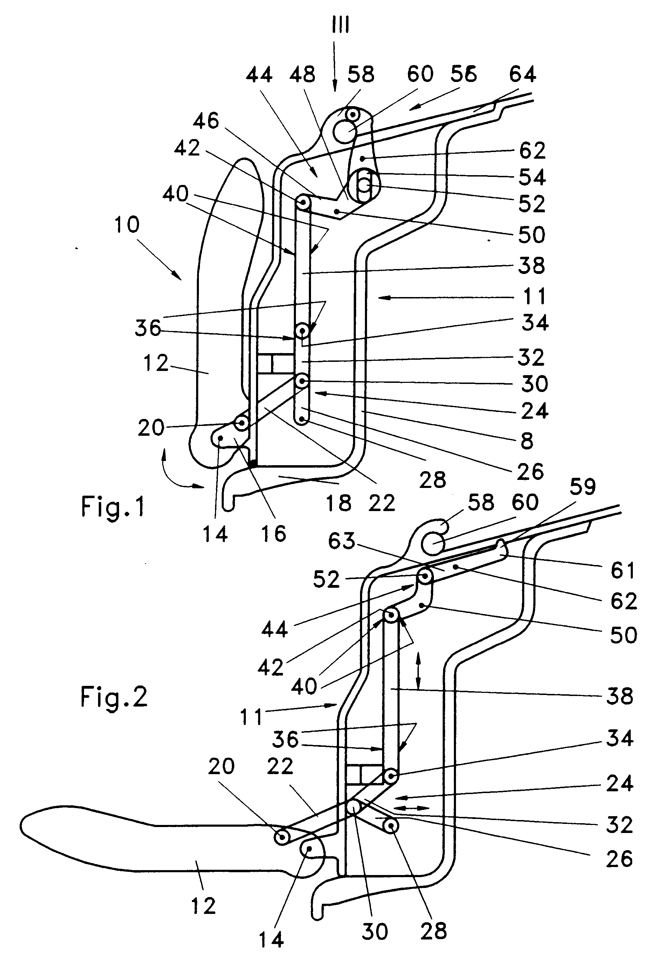

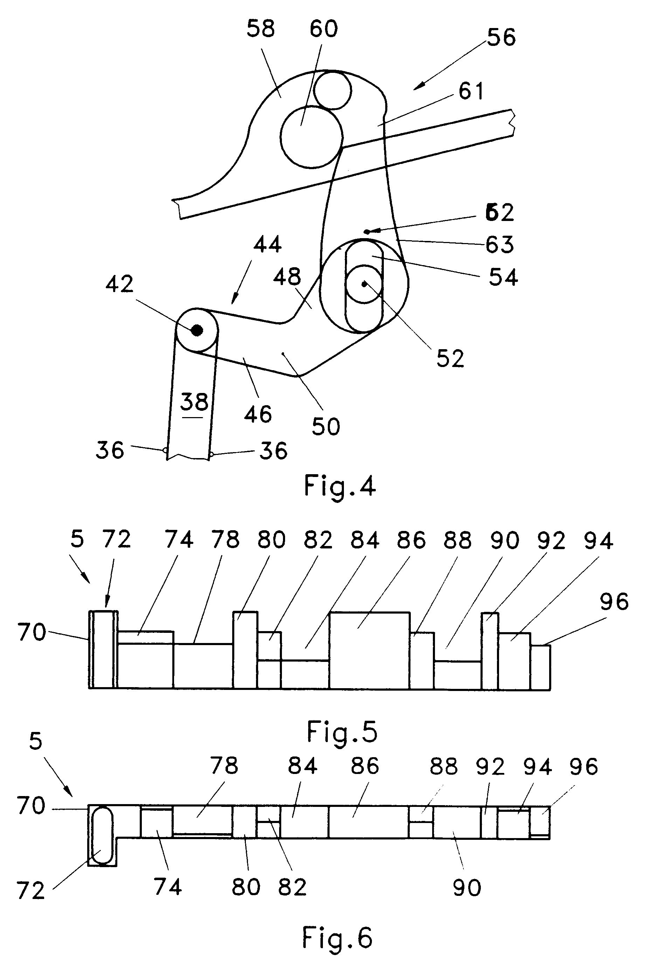

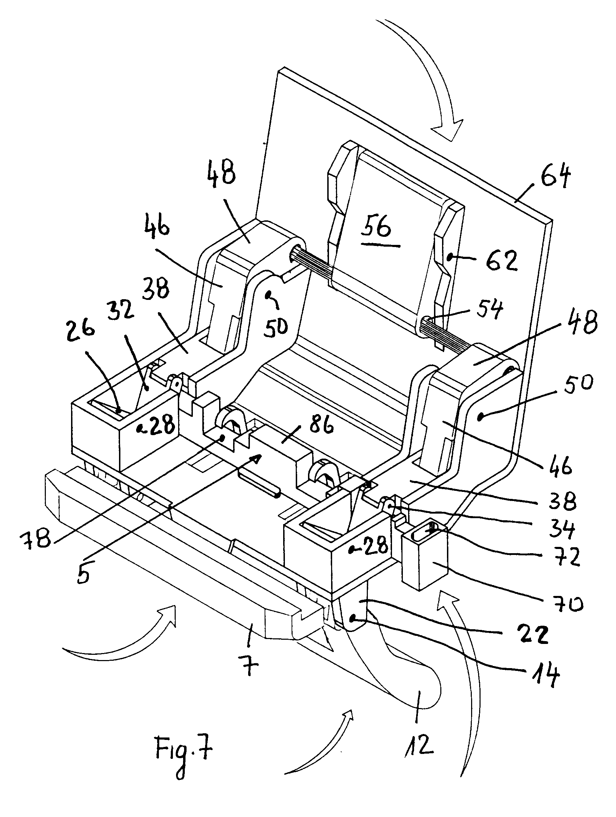

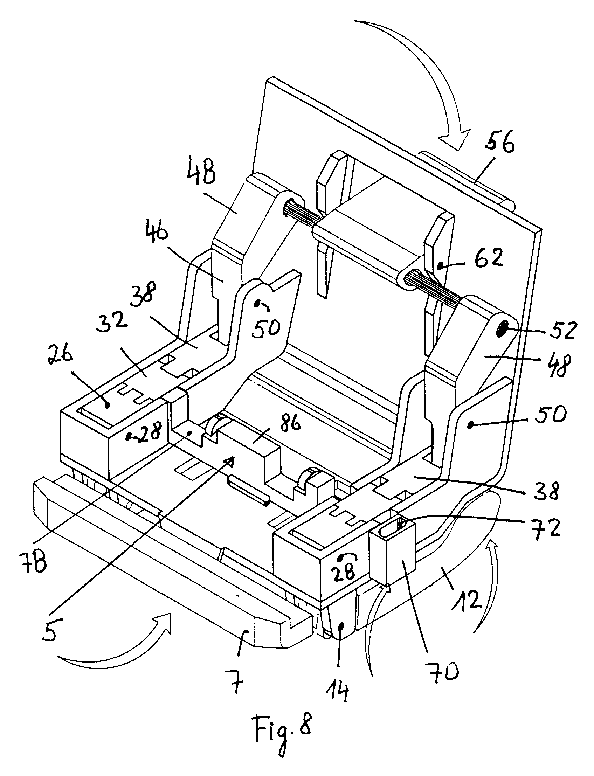

In den Fig. 1,2, 7 und 8 ist eine Verschlußanordnung 10 für Behälter, insbesondere Motorradkoffer, mit einem Grundkörper 11 mit einem angelenkten Tragegriff 12 dargestellt, der über einen Hebelmechanismus mit einem schwenkbaren und mit einem Dritteil 60, hier Motorradstange, betriebsgemäß verbindbaren Verschlußorgan 56 zusammenarbeitet. Zwischen dem Tragegriff 12 und dem Verschlußorgan 56 ist ein verschiebbares Organ 38 angeordnet, das mit dem Verschlußorgan 56 über einen Hebel 44 zusammenarbeitet, während es mit dem Tragegriff 12 über einen Kniehebel 24 in Wirkverbindung steht. Das Organ 38 ist hier eine linear geführte Stange, die zwischen zwei Arbeitspositionen verschiebbar ist. Zur Führung der Stange 38 sind Führungskörper 46 vorgesehen, so daß das Organ 38 lineare Hin- und Herbewegungen ausführen kann, wenn der Tragegriff 12 in Richtung des Doppelpfeiles verschwenkt wird. Ferner ist zu erkennen, daß der Hebel 44 ein zweiarmiger Winkelhebel mit einem Kraftarm 46 und Lastarm 48 ist. Das gleiche gilt auch für das Verschlußorgan 56, dessen Lastarm 61 eine Nase 59 trägt, die in ihrer wirksamen Betriebsstellung das Drittel 60 zumindest teilweise umgreift bzw. mit diesem in Druckverbindung steht und die um eine ortsfeste Achse 62 verschwenkbar ist. Im Kraftarm 63 des Verschlußorgans 56 ist ein Langloch 54 ausgebildet (vgl. Fig. 4), in dem ein den Lastarm 58 des Winkelhebels 44 mit dem Kraftarm 63 des Verschlußorgans 56 verbindender Bolzen 52 verschieblich angeordnet ist. Der Kraftarm 46 des Hebels 44 ist mit der Stange 38 gelenkig verbunden und weist ebenfalls ein nicht näher dargestelltes Langloch auf. In diesem Langloch ist der Gelenkpunkt 42 angeordnet. Der Lastarm 48 und der Kraftarm 63 sind durch den Bolzen 52 verbunden, so daß das Verschlußorgan 56 um den Gelenkpunkt 62 verschwenkbar ist. Der Kniehebel 24 ist mit dem Tragegriff 12 mittels einer Zug- und Druckstange 22 gelenkig verbunden. Dabei greift die Stange 22 den Kniehebel 24 im Gelenkpunkt 30 und den Tragegriff 12 im Gelenkpunkt 20 an. Der Tragegriff 12 ist um den Gelenkpunkt 14 verschwenkbar. Das Ende des Tragegriffes 12 ist gekröpft.

Ferner ist zu erkennen, daß der Kniehebel 24 aus zwei Stangen 26, 32 besteht, von denen die eine Stange 26 mit dem Grundkörper 11 im Gelenkpunkt 28 sowie mit der Zug- und Druckstange 22 gelenkig verbindbar ist, während die andere Stange 32 verstellbar angeordnet und sowohl mit dem Organ 38 als auch mit der Zug- und Druckstange 22 gelenkig verbindbar ist.

Der Grundkörper 11 besteht aus einem Innenteil 8 mit einem vorstehenden Basisteil 18 und einem Deckabschnitt 64 mit einer Nase 58, die zusammen mit der Nase 59 das Dritteil 60 umgreift.

Wird nun der in Fig. 1 dargestellte Tragegriff 12 nach unten verschwenkt, dann nimmt die Zug- und Druckstange 22 den Gelenkpunkt 30 mit und der Kniehebel 24 nimmt die in Fig. 2 dargestellte Position ein. Dabei bewegt sich die Stange 38 vertikal nach unten und verschwenkt den Hebel 44 um den Gelenkpunkt 50 nach unten, so daß das Verschlußorgan 56 das Dritteil 60 freigibt.

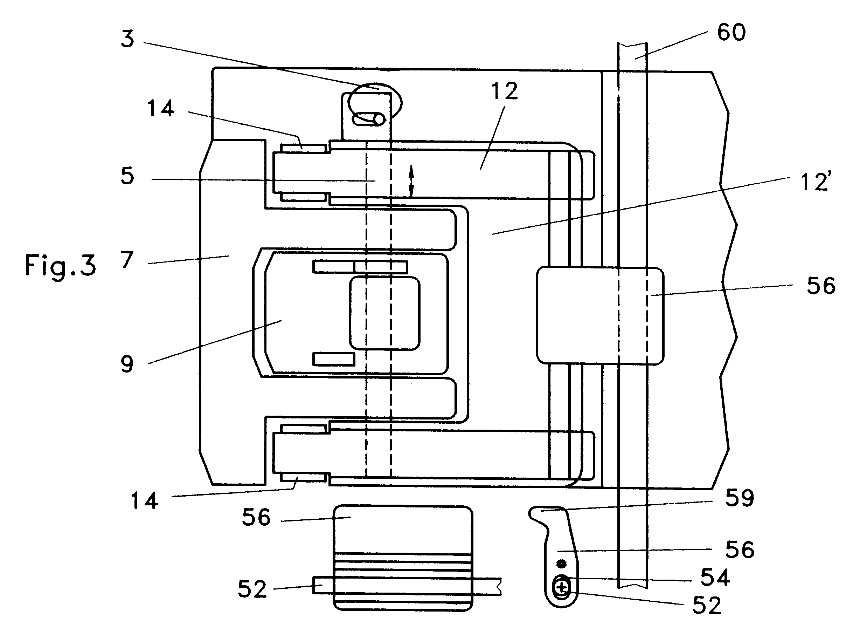

Der Fig. 3 ist zu entnehmen, daß die Verschlußanordnung ferner eine Schließplatte 9 sowie eine Deckelkralle 7 aufweist, wobei die Schließplatte 9 um die Achse 14 verschwenkbar ist. Die Betriebsstellung des Tragegriffes 12 wird durch eine Riegelstange 5 bestimmt, die in Richtung des Doppelpfeiles verstellbar ist und durch ein Zentralschloß 3 gesichert ist. Die Riegelstange 5 ist mit dem Kniehebel 24 in Wirkverbindung bringbar. Die Riegelstange 5 nimmt insgesamt drei Betriebsstellungen ein und ist so beschaffen, daß sie in der ersten Arbeitsposition sowohl den Kniehebel 24 als auch die Schließplatte 13 sperrt, in der zweiten Arbeitsposition den Kniehebel 24 sperrt und die Schließplatte 9 freigibt und in der dritten Arbeitsposition sowohl den Kniehebel 24 als auch die Schließplatte 9 freigibt. Hierfür sind mehrere Einschnitte, Abschrägungen, Ausnehmungen, Vertiefungen usw. vorgesehen.

Die nähere Ausbildung der Riegelstange 5 ist in den Fig. 5 und 6 offenbart. Man erkennt, daß der Grundkörper an seinem einen Ende 70 eine Ausnehnmung 72 für das nicht näher dargestellte Schloß vorsieht. Das Langloch 72 ist als eine durchgehende Öffnung ausgebildet. Im Grundkörper sind eine erste Schräge 74, 94 und eine Abschrägung 78, 96 ausgebildet, die mit dem Kniehebel 24 zusammenarbeiten, und zwar abhängig davon, welche Position die Riegelstange 5 einnimmt. Zwischen den beiden Stegen 80 und 92 sind jeweils zwei Abschrägungen 82, 88 bzw. Ausnehmungen 84, 90 ausgebildet, die mit der Schließplatte in Wirkverbindung bringbar sind.

Abhängig davon, welche relative Lage die Riegelstange 5 in bezug auf den Kniehebel bzw. die Schließplatte einnimmt, ist die Schließplatte und/oder der Kniehebel frei bzw. gesperrt.

## Patentansprüche

1. Verschlußanordnung (10) für Behälter, insbesondere Motorradkoffer, mit einem Grundkörper (11) mit einem angelenkten Tragegriff (12), der über einen Hebelmechanismus mit einem verschwenkbaren und mit einem Dritteil (60), z.B. Motorradstange, betriebsgemäß verbindbaren Verschlußorgan (56) zusammenarbeitet,
dadurch gekennzeichnet,
daß zwischen dem Tragegriff (12) und dem Verschlußorgan (56) mindestens ein verschiebbares Organ (38) angeordnet ist, das mit dem Veschlußorgan (56) über einen Hebel (44) zusammenarbeitet, während es mit dem Tragegriff (12) über mindestens einen Kniehebel (24) in Wirkverbindung steht.

2. Veschlußanordnung nach Anspruch 1,
dadurch gekennzeichnet,
daß das Organ (38) eine linear geführte Stange ist, die zwischen zwei Arbeitspositionen verschiebbar ist.

3. Veschlußanordnung nach Anspruch 1 oder 2,
dadurch gekennzeichnet,
daß Führungskörper (36, 40) vorgesehen sind, zwischen denen die Stange (38) geführt ist.

4. Veschlußanordnung nach einem der Ansprüche 1 bis 3,
dadurch gekenzzeichnet,
daß der Hebel (44) ein zweiarmiger Winkelheber ist.

5. Veschlußanordnung nach einem der Ansprüche 1 bis 4,
dadurch gekennzeichnet,
daß das Verschlußorgan (56) ein zweiarmiger Hebel ist, dessen Lastarm (61) eine Nase (59) trägt, die in ihrer wirksamen Betriebsstellung das Dritteil (60) zumindest teilweise umgreift bzw. mit diesem in Druckverbindung steht.

6. Verschlußanordnung nach einem der Ansprüche 1 bis 5,
dadurch gekennzeichnet,
daß im Kraftarm (63) des Veschlußorgans (56) ein Langloch (54) ausgebildet ist, in dem ein den Lastarm (48) des Winkelhebels (44) mit dem Kraftarm (63) des Veschlußorgans (56) verbindender Bolzen (52) verschieblich angeordnet ist.

7. Verschlußanordnung nach einem der Ansprüche 1 bis 6,
dadurch gekennzeichnet,
daß der Kniehebel (24) mit dem Tragegriff (12) mittels einer Zug- und Druckstange (22) gelenkig verbunden ist.

8. Verschlußanordnung nach einem der Ansprüche 1 bis 7,
dadurch gekennzeichnet,
daß der Kniehebel (24) aus zwei Stangen (26,32) besteht, von denen die eine Stange (26) mit dem Grundkörper (11) sowie mit der Zug- und Druckstange (22) gelenkig verbindbar ist, während die andere Stange (32) verstellbar angeordnet und sowohl mit dem Organ (38) als auch mit der Zug- und Druckstange (22) gelenkig verbindbar ist.

9. Verschlußanordnung nach einem der Ansprüche 1 bis 8,
dadurch gekennzeichnet,
daß in eingeschwenkter Stellung des Tragegriffes (12) die Stangen (26, 32) des Kniehebels (24) annähernd parallel zueinander verlaufen.

10. Verschlußanordnung nach Anspruch 9,
dadurch gekennzeichnet,
daß in eingeschwenkter Stellung des Tragegriffes (12) der Gelenkpunkt (30) des Kniehebels (24) hinter dem Totpunkt des Kniehebels (24) angeordnet ist.

11. Verschlußanordnung nach einem der Ansprüche 1 bis 10,
gekennzeichnet durch
eine Riegelstange (5), die mit dem Kniehebel (24) in Wirkverbindung bringbar ist.

12. Verschlußanordnung nach Anspruch 11,
dadurch gekennzeichnet,
daß die Riegelstange (5) mindestens zwei Betriebsstellungen einnimmt, wobei sie in der einen Betriebsstellung den Kniehebel (24) sperrt, während sie ihn in der anderen Betriebsstellung freigibt.

13. Veschlußanordnung nach Anspruch 12,
dadurch gekennzeichnet,
daß die Riegelstange (5) in ihrer Richtung verstellbar ist und ihre Arbeitspositionen mittels eines Schlosses (3) festlegbar sind.

14. Verschlußanordnung nach einem der Ansprüche 1 bis 13,
dadurch gekennzeichnet,
daß die Riegelstange (5) quer zu ihr verlaufende Ausnehmungen (74, 88) bzw. Abschrägungen (78, 90) aufweist, durch welche die Kniehebel (24) freigebbar sind.

15. Verschlußanordnung nach einem der Ansprüche 1 bis 14 mit einer Schließplatte (13) sowie einer Deckelkralle (7),
dadurch gekennzeichnet,
daß die Riegelstange (5) weitere Einschnitte (82, 88) bzw. Ausnehmungen (84,90) aufweist, die mit der Schließplatte (13) betriebsgemäß verbindbar ist und diese sperrt bzw. freigibt.

16. Verschlußanordnung nach Anspruch 15,
dadurch gekennzeichnet,
daß die Riegelstange (5) drei Arbeitspositionen einnimmt, derart, daß sie in der ersten Arbeitsposition sowohl den Kniehebel (24) als auch die Schließplatte (13) sperrt, in der zweiten Arbeitsposition den Kniehebel (24) sperrt und die Schließplatte (13) freigibt und in der dritten Arbeitsposition sowohl den Kniehebel (24) als auch die Schließplatte (13) freigibt.
